# EUROPEAN PATENT SPECIFICATION

(11) **EP 0 850 567 B1**
(45) Date of publication and mention of the grant of the patent: **23.07.2003**
(21) Application number: 97660135.1
(22) Date of filing: 01.12.1997
(51) Int. Cl.: A22C 13/00

(54) **Cellulose-containing casing and method for manufacture of same**
Cellulose enthaltende Hülle und Verfahren zu ihrer Herstellung
Enveloppe contenant de la cellulose et son procédé de préparation

(30) Priority: 27.12.1996 FI 965212
(43) Date of publication of application: 01.07.1998
(73) Proprietor: Eriksson Capital AB, 22101 Mariehamn (FI)
(72) Inventor: Johansson, Tor, 22100 Mariehamm (FI)
(74) Representative: Hakkila, Maini Annika

(56) References cited:
- EP-A- 0 698 346
- EP-A- 0 712 889
- WO-A-91/09530
- WO-A-95/28441
- DE-A- 3 640 234
- DE-B- 1 504 982
- US-A- 3 833 022
- US-A- 4 350 655

## Description

The invention concerns a cellulose-containing casing and a method for manufacture of same.

In the present patent application, a cellulose-containing casing, in the following "casing", is, for example, a fibrous casing, a sausage casing, a cellulose or cellophane casing, which can be used for enclosing of foods, such as sausage.

Various ready-made sausage products, such as long-keeping sausages, for example salami, mettwurst, pepperoni, etc., are made of frozen meat, which is first ground by means of a mill or cutter into a mix, after which ordinary additives are added to the mix, such as, for example, salt, nitrite, nitrate, ascorbic acid, etc. After that the mix is extruded into a casing and fermented, i.e. soured, in order to make a sausage.

The manufacture of sausage is a bacterio-physiological process, for which a bacterial pure culture is used. Its function is lowering of the pH value so as to form aroma agents typical of a long-keeping sausage. The fermenting takes place in a smoke oven, in a so-called cold-smoke oven, and during the fermenting, liquid is separated from the sausage product because of lactic acid that has been formed, and the pH value is lowered as the ability of the meat to bind water is lowered. During fermentation, liquid departs from the product as the liquid is diffused out through the casing, and after fermentation the sausages must be allowed to dry over a period of time.

Controlling of the parameters is highly important from the point of view of the drying process, but, nevertheless, the drying can take, even optimally, several weeks, up to 60 days, in the case of some sausage types. Parameters by whose means the drying is controlled include, for example, temperature and relative humidity. If a lower drying temperature is employed, the process of curing becomes slower and the making of the sausage takes a long time. At higher temperatures, the drying is initially excessively rapid, a hard layer is formed at the sausage casing, which is not penetrable by water, in which case the drying becomes slower, and this causes incorrect fermentation, as a result of which the quality of the sausage deteriorates. Relative humidity of the environment also affects the elimination of liquid from the sausage. This means that the drying stage has become an obvious bottle-neck for sausage factories, which binds a considerable amount of capital.

A casing for use for packaging of food, such as sausage, and a method for manufacture of same are described in the patent publication **FI 84,772**. For the manufacture of this fibrous casing, paper that contains a long-fibre material obtained from manilla hemp and viscose have been used, in which connection the result was a resilient, fibre-reinforced casing of lower weight, which permitted a somewhat quicker curing of sausage, as compared with earlier casings. Attempts have also been made to solve the problem of drying by making the pores present in the sausage casing larger, but this has not been successful.

US-A-3 833 022 discloses a cellulose containing casing, which contains paper and regenerated cellulose, wherein a filler agent is dispersed into the casing in the manufacturing stage uniformly into the whole mixture of paper and regenerated cellulose.

As a rule, it is considered that the drying has been completed when the loss of weight is about 20 per cent in the product, in the case of mettwurst and salami the loss of weight must be about 25...30 %, and in the case of some sausage types up to about 40 %.

The present invention concerns a casing by whose means the time of drying of sausage can be made shorter. The invention also concerns a method for manufacture of said casing.

Surprisingly it was noticed that when filler agents are dispersed uniformly in the stage of manufacture into the viscose used for manufacture of the casing, a casing is obtained with which the drying of a sausage becomes up to about 40 per cent quicker, as compared with reference casings. The penetrability of smoke through the casing is improved, whereby the stage of fermentation is enhanced and the aw-value of the sausage surface is lowered more quickly, compared with reference casings.

The aw-value (water activity) of the surface represents the moisture content in the surface. Surprisingly it was also noticed that in this way a casing with a matt face was obtained, which is suitable for use with mould starters and for aesthetic purposes.

The casing in accordance with the invention is characterized in that silicon dioxide is dispersed into it in the manufacturing stage uniformly into the whole mixture of paper and regenerated cellulose.

The method in accordance with the invention for manufacture of a cellulose-containing casing is characterized in that, in the manufacturing stage, silicon dioxide is dispersed into the casing uniformly into the whole mixture of paper and regenerated cellulose.

By means of the casing in accordance with the invention, the time of drying of sausage can be shortened by up to about 40 per cent, as compared with the casings currently in use. The casing in accordance with the invention has an about 4 % better penetrability to smoke, so that, thus, it is also possible to shorten the time of smoke curing and, thus, to lower the cost of the process of manufacture. The casing in accordance with the invention has a matt surface, which can be used for aesthetic purposes and which, for example, provides an adhering face for mould starters.

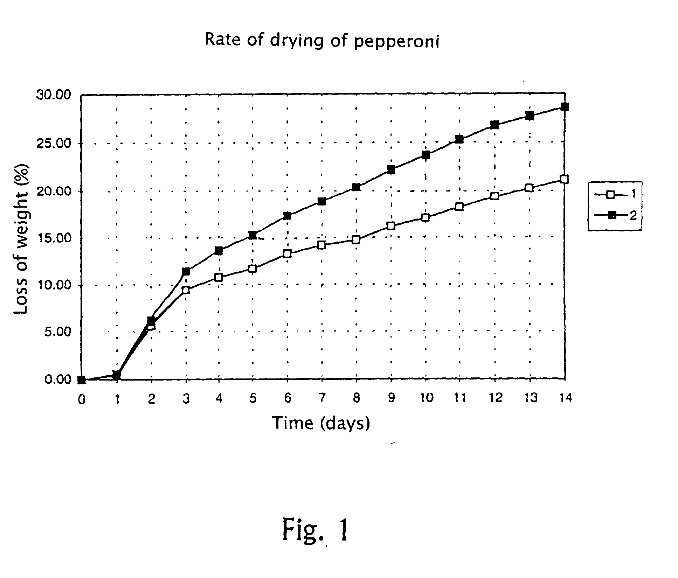

Figure 1 illustrates the drying with a casing (no. 2) in accordance with the invention as compared with a commercial normal fibrous casing (no. 1). With a casing in accordance with the invention and with a commercial fibrous casing, long-keeping sausage of pepperoni type was manufactured and cured with a conventional U.S. curing program for long-keeping sausage. In the test, the losses of weight (%) in the sausages were observed as a function of time. With a casing in accordance with the present invention, the sausage dried clearly more quickly.

The casing in accordance with the invention is manufactured mainly out of paper, which is impregnated with viscose. In accordance with the invention, this viscose mixture is mixed with silicon dioxide, by dispersing it uniformly into the mixture. Out of the filler agent, a water suspension can be prepared, which is mixed into the mixture, or it can be mixed into the mix as such. Most filler agents can also be mixed into the mixture together. The support material that is used is cellulose.

Admixtures have also been used earlier, but mainly for aesthetic purposes, and, for example, titanium oxide has been added to the casing as a colour pigment.

In the present invention, it has been discovered to disperse silicon dioxide into the whole casing so that it forms a more open structure and, thereby, affects the penetrability to liquid and the elimination of moisture as well as the penetrability to smoke. The prior-art casing is also penetrable to water at a certain rate.

The quantity of silicon dioxide in the fibrous casing is 1...10 per cent of the whole quantity of the casing, preferably 2...4 % of the weight of the casing.

In the following, the invention will be described further with the aid of exemplifying embodiments, which are not supposed to restrict the invention.

### Example 1.

### Manufacture of casing

A fibrous paper is formed into a tube, which is impregnated with viscose through the lips of the die, into which 2 per cent (calculated from the total weight of the casing mix) of amorphous silicon dioxide has been mixed. The viscose-impregnated tubular paper is then passed through a number of different acid baths. By the effect of acid and salts, the viscose coagulates and regenerated into cellulose. At this stage, the fibres are embedded in the regenerated cellulose as a strong and elastic tubular fibrous casing. The strength of the fibrous casing can be varied, regulated, selected in compliance with a choice of a thinner or thicker fibre reinforcement and/or in compliance with the properties and the degree of impregnation of the viscose in the fibrous mix.

### Example 2

### Manufacture of casing

A fibrous paper is formed into a tube, which is impregnated with viscose into which 4 per cent of silicon dioxide in a water suspension has been mixed (the quantity of silicon dioxide calculated from the total weight of the casing mass). Then the tubular paper impregnated with viscose is passed through a number of different acid baths. By the effect of acid and salts, the viscose coagulates and is regenerated into cellulose. At this stage the fibres are embedded in the regenerated cellulose as a strong and elastic tubular fibrous casing.

These examples are, however, by no means supposed to restrict the invention, and many modifications are possible within the scope of the inventive idea defined in the following patent claims.

## Claims

1. A cellulose-containing casing, which contains paper and regenerated cellulose, **characterized in that** silicon dioxide is dispersed into the casing in the manufacturing stage uniformly into the whole mixture of paper and regenerated cellulose.

2. A casing as claimed in claim 1, **characterized in that** silicon dioxide is powdery material, which produces a porous structure in the casing and has no unfavourable effect on the properties of the cellulose-fibre casing.

3. A casing as claimed in claim 1 or 2, **characterized in that** the quantity of silicon dioxide is 1...10 % of the whole quantity of the casing.

4. A casing as claimed in any one of the claims 1 to 3, **characterized in that** the quantity of silicon dioxide is 2...4 % of the whole quantity of the casing.

5. A casing as claimed in any one of the claims 1 to 4, **characterized in that** the casing has a matt surface.

6. A method for manufacture of a cellulose-containing casing which contains paper and regenerated cellulose, **characterized in that**, in the manufacturing stage, silicon dioxide is dispersed into the casing uniformly into the whole mixture of paper and regenerated cellulose.

7. A method as claimed in claim 6, **characterized in that** silicon dioxide is powdery material, which produces a porous structure in the casing and has no unfavourable effect on the properties of the cellulose-fibre casing.

8. A method as claimed in claim 6 or 7, **characterized in that** the quantity of silicon dioxide is 1...10 % of the whole quantity of the casing.

9. A method as claimed in any one of the claims 6 to 8, **characterized in that** the quantity of silicon dioxide is 2...4 % of the whole quantity of the casing.

10. A method as claimed in any one of the claims 6 to 9, **characterized in that** the casing has a matt surface.

11. A composition of a casing, **characterized in that** the casing contains paper, regenerated cellulose and silicon dioxide.

12. A composition of a casing as claimed in claim 11, **characterized in that** the quantity of silicon dioxide is 1...10 % of the whole quantity of casing.

13. A composition of a casing as claimed in claim 11 or 12, **characterized in that** the quantity of silicon dioxide is 2...4 % of the whole quantity of the casing.

14. A composition of a casing as claimed in any one of claims 11 to 13, **characterized in that** the casing has a matt surface.

## Patentansprüche

1. Cellulose enthaltende Hülle, welche Papier und regenerierte Cellulose enthält,
**dadurch gekennzeichnet, dass**
Siliciumdioxid in die Hülle in der Herstellungsstufe gleichförmig in der gesamten Mischung aus Papier und regenerierter Cellulose dispergiert ist.

2. Hülle gemäß Anspruch 1,
**dadurch gekennzeichnet, dass**
Siliciumdioxid pulverförmiges Material ist, welches eine poröse Struktur in der Hülle herstellt und keinen ungünstigen Effekt auf die Eigenschaften der Cellulosefaser-Hülle aufweist.

3. Hülle gemäß Anspruch 1 oder 2,
**dadurch gekennzeichnet, dass**
die Menge des Siliciumdioxids 1 bis 10% der gesamten Menge der Hülle beträgt.

4. Hülle gemäß einem der Ansprüche 1 bis 3,
**dadurch gekennzeichnet, dass**
die Menge an Siliciumdioxid 2 bis 4% der gesamten Menge der Hülle beträgt.

5. Hülle gemäß einem der Ansprüche 1 bis 4,
**dadurch gekennzeichnet, dass**
die Hülle eine matte Oberfläche besitzt.

6. Verfahren zur Herstellung einer cellulosehaltigen Hülle, welche Papier und regenerierte Cellulose enthält,
**dadurch gekennzeichnet, dass**
in dem Herstellungsschritt Siliciumdioxid in der Hülle gleichförmig in der gesamten Mischung aus Papier und regenerierter Cellulose dispergiert wird.

7. Verfahren gemäß Anspruch 6,
**dadurch gekennzeichnet, dass**
Siliciumdioxid pulverförmiges Material ist, welches eine poröse Struktur in der Hülle herstellt und keinen ungünstigen Effekt auf die Eigenschaften der Cellulosefaser-Hülle aufweist.

8. Verfahren gemäß Anspruch 6 oder 7,
**dadurch gekennzeichnet, dass**
die Menge an Siliciumdioxid 1 bis 10% der gesamten Menge der Hülle beträgt.

9. Verfahren gemäß einem der Ansprüche 6 bis 8,
**dadurch gekennzeichnet, dass**
die Menge an Siliciumdioxid 2 bis 4% der gesamten Menge der Hülle beträgt.

10. Verfahren gemäß einem der Ansprüche 6 bis 9,
**dadurch gekennzeichnet, dass**
die Hülle eine matte Oberfläche besitzt.

11. Zusammensetzung einer Hülle,
**dadurch gekennzeichnet, dass**
die Hülle Papier, regenerierte Cellulose und Siliciumdioxid enthält.

12. Zusammensetzung einer Hülle gemäß Anspruch 11,
**dadurch gekennzeichnet, dass**
die Menge an Siliciumdioxid 1 bis 10% der gesamten Menge der Hülle beträgt.

13. Zusammensetzung einer Hülle gemäß Anspruch 11 oder 12,
**dadurch gekennzeichnet, dass**
die Menge an Siliciumdioxid 2 bis 4% der gesamten Menge der Hülle beträgt.

14. Zusammensetzung einer Hülle gemäß einem der Ansprüche 11 bis 13,
**dadurch gekennzeichnet, dass**
die Hülle eine matte Oberfläche besitzt.

## Revendications

1. Enveloppe contenant de la cellulose, qui contient du papier et de la cellulose régénérée, **caractérisée en ce que** du dioxyde de silicium est dispersé dans l'enveloppe, lors de l'étape de fabrication, d'une manière uniforme dans l'ensemble du mélange du papier et de la cellulose régénérée.

2. Enveloppe selon la revendication 1, **caractérisée en ce que** le dioxyde de silicium est un matériau à l'état de poudre, qui produit une structure poreuse dans l'enveloppe et n'a aucun effet nuisible sur les propriétés de l'enveloppe formée de fibres de cellulose.

3. Enveloppe selon la revendication 1 ou 2, **caractérisée en ce que** la quantité de dioxyde de silicium est égale à 1 ... 10 % de la quantité totale de l'enveloppe.

4. Enveloppe selon l'une quelconque des revendications 1 à 3, **caractérisée en ce que** la quantité de dioxyde de silicium est égale à 2 ... 4 % de la quantité totale de l'enveloppe.

5. Enveloppe selon l'une quelconque des revendications 1 à 4, **caractérisée en ce que** l'enveloppe possède une surface mate.

6. Procédé pour fabriquer une enveloppe contenant de la cellulose, qui contient du papier et de la cellulose régénérée, **caractérisé en ce que**, lors de l'étape de fabrication, du dioxyde de silicium est dispersé dans l'enveloppe, d'une manière uniforme dans l'ensemble du mélange du papier de la cellulose régénérée.

7. Procédé selon la revendication 6, **caractérisé en ce que** le dioxyde de silicium est un matériau à l'état de poudre, qui produit une structure poreuse dans l'enveloppe et n'a aucun effet nuisible sur les propriétés de l'enveloppe formée de fibres de cellulose.

8. Procédé selon la revendication 6 ou 7, **caractérisé en ce que** la quantité de dioxyde de silicium est égale à 1 ... 10 % de la quantité totale de l'enveloppe.

9. Procédé selon l'une quelconque des revendications 6 à 8, **caractérisé en ce que** la quantité de dioxyde de silicium est égale à 2 ... 4 % de la quantité totale de l'enveloppe.

10. Procédé selon l'une quelconque des revendications 6 à 9, **caractérisée en ce que** l'enveloppe possède une surface matte.

11. Composition d'une enveloppe, **caractérisée en ce que** l'enveloppe contient du papier, de la cellulose régénérée et du dioxyde de silicium.

12. Composition d'une enveloppe selon la revendication 11, **caractérisée en ce que** la quantité de dioxyde de silicium est égale à 1 ... 10 % de la quantité totale de l'enveloppe.

13. Composition d'une enveloppe selon la revendication 11 ou 12, **caractérisé en ce que** la quantité de dioxyde de silicium est égale à 2 ... 4 % de la quantité totale de l'enveloppe.

14. Composition d'une enveloppe selon l'une quelconque des revendications 11 à 13, **caractérisée en ce que** l'enveloppe possède une surface matte.
